# FASCICULE DE BREVET EUROPEEN

(11) **EP 3 089 126 B1**
(45) Date de publication et mention de la délivrance du brevet: **16.05.2018**
(21) Numéro de dépôt: 16161564.6
(22) Date de dépôt: 22.03.2016
(51) Int. Cl.: A47J 31/36

(54) **DISPOSITIF DE STOCKAGE ET DE DISTRIBUTION DE CONSOMMABLES**
LAGER- UND VERTEILUNGSVORRICHTUNG FÜR VERBRAUCHSGÜTER
DEVICE FOR STORING AND DISPENSING CONSUMABLES

(30) Priorité: 28.04.2015 FR 1553828
(43) Date de publication de la demande: 02.11.2016
(73) Titulaire: PHOTO-ME INTERNATIONAL PLC, Bookham, Surrey KT23 3EU (GB)
(72) Inventeur: BOURDELAIN, Laurent, 38420 Revel (FR)
(74) Mandataire: Cabinet Laurent & Charras

(56) Documents cités:
- EP-A1- 1 310 199
- EP-A1- 1 575 006
- EP-A1- 1 916 634
- EP-A2- 2 017 800
- WO-A1-2005/076235
- DE-A1- 3 412 900
- DE-U1-202010 003 626
- US-A- 3 610 469
- US-A- 3 701 457
- US-B1- 7 798 362

## Description

### DOMAINE TECHNIQUE

La présente invention concerne un dispositif de stockage et de distribution de consommables pour un distributeur automatique de boissons. L'invention trouve une application particulièrement avantageuse pour les distributeurs offrant un grand choix de boissons avec différent types de gobelets.

### ART ANTERIEUR

Il existe des distributeurs automatiques de boissons dans lesquels plusieurs boissons peuvent être sélectionnées. Ces distributeurs intègrent classiquement une machine d'extraction des substances d'une capsule associée à un dispositif de stockage et de distribution des capsules. Ce dispositif de stockage et de distribution des capsules comprend un barillet mobile en rotation dans lequel sont stockées des capsules. Les capsules sont stockées sur plusieurs colonnes, chaque colonne correspond à un type de capsules dont la substance permet de réaliser une boisson parmi les boissons proposées. Lorsqu'un utilisateur sélectionne une boisson, le barillet est déplacé en rotation pour que la machine d'extraction puisse utiliser la colonne de capsule correspondant à la boisson sélectionnée. La capsule est alors insérée dans la machine d'extraction et la boisson est préparée.

Cependant, la quantité de boissons réalisables par un distributeur automatique de boissons est en constante augmentation. En effet, les distributeurs automatiques de boissons peuvent réaliser des cafés « ristreto », « espresso », « lungo », des chocolats chauds, des soupes, des thés... Toutes ces boissons nécessitent des gobelets aux contenances variées. Les documents DE20 2010 003 626U1, EP1575006A1 et US3610469 divulguent des dispotives de stockage et de distribution de consommables comprenant un barillet. Les documents EP 0 339 946 et EP 0 577 293 proposent un distributeur automatique de boissons, dans lequel plusieurs types de gobelets peuvent être délivrés en fonction de la boisson sélectionnée. Pour ce faire, les gobelets sont empilés dans un carrousel sur plusieurs piles, chaque pile correspondant à une taille de gobelet différente. Lorsqu'une boisson est sélectionnée, le carrousel est déplacé en rotation pour qu'un dispositif mécanique de séparation puisse extraire un gobelet de la pile correspondante à la boisson sélectionnée.

Cependant, ce type de carrousel, destiné au choix des gobelets, augmente l'encombrement des distributeurs automatiques de boissons. Le problème technique de l'invention est de réduire l'encombrement d'un distributeur automatique de boisson comportant plusieurs tailles de gobelets.

### EXPOSE DE L'INVENTION

Les revendications 1, 8, 9 divulguent l'invention. Les revendications 2-7 divulguent des réalisations préférées. La présente invention vise à résoudre ce problème technique au moyen d'un dispositif de stockage et de distribution comportant un barillet intégrant à la fois les capsules et les gobelets de différentes tailles. Le dispositif permet de proposer un grand nombre de boissons différentes, ainsi que plusieurs tailles de gobelets, dans un environnement réduit.

A cet effet, selon un premier aspect, l'invention concerne un dispositif de stockage et de distribution de consommables pour un distributeur automatique de boissons, le dispositif comportant un barillet comprenant une face supérieure, une face inférieure et une face cylindrique reliant les faces supérieure et inférieure, un premier ensemble de logements formé par plusieurs rainures disposées sur la face cylindrique, le premier ensemble de logements étant destiné à stocker un premier type de consommable, et un deuxième ensemble de logements formé par plusieurs alésages traversant le barillet entre les faces supérieure et inférieure, le deuxième ensemble de logements étant destiné à stocker un deuxième type de consommable.

L'invention permet ainsi de stocker et de distribuer des capsules et des gobelets de plusieurs tailles au moyen d'un seul barillet, ce qui permet de réduire l'encombrement et d'augmenter la capacité de stockage des capsules et des gobelets. Un distributeur automatique de boissons peut ainsi proposer plusieurs tailles de gobelets avec un encombrement réduit. De plus, le dispositif permet de proposer un nombre de capsules et un nombre de gobelets équivalent.

Selon un mode de réalisation, les logements du premier ensemble de logements et/ou du deuxième ensemble de logements s'étendent longitudinalement entre les faces supérieure et inférieure. Ce mode de réalisation permet de faciliter la transmission des consommables entre les faces supérieure et inférieure. Ainsi, lorsque les consommables sont introduits dans le barillet par la face supérieure, ils se déplacent longitudinalement vers la face inférieure. En variante, les logements s'étendent hélicoïdalement entre les faces supérieure et inférieure de sorte à augmenter la longueur des logements entre les faces supérieure et inférieure. Cette variante permet d'augmenter la capacité de stockage de chaque logement et ainsi de limiter les opérations de réapprovisionnement des consommables.

Selon un mode de réalisation, les logements du premier ensemble de logements et/ou du deuxième ensemble de logements sont régulièrement espacés par rapport au centre du barillet. Ce mode de réalisation permet de faciliter la commande des déplacements du barillet de sorte à extraire les consommables. En effet, un moteur déplaçant le barillet en regard d'un actionneur apte à extraire les consommables du barillet est plus facile à commander lorsque le pas est constant entre deux logements consécutifs.

Selon un mode de réalisation, chaque logement du premier ensemble de logements comporte une paroi circulaire disposée dans le barillet et une paroi de retenue disposée circonférentiellement depuis la face cylindrique du barillet, la paroi de retenue comprenant un évidement au niveau d'une extrémité de la face cylindrique en regard de la face inférieure. La paroi de retenue permet de maintenir le premier type de consommable sur les côtés du barillet. L'évidement permet d'extraire le premier type de consommable du logement au niveau de l'extrémité inférieure du barillet.

Selon un mode de réalisation, le premier type de consommable correspond à des capsules et le deuxième type de consommable correspond à des gobelets, deux capsules de contenants distincts étant destinées à être positionnées dans deux logements distincts du premier ensemble de logements, et deux gobelets de formes distinctes étant destinés à être positionnés dans deux logements distincts du deuxième ensemble de logements. Le dispositif permet ainsi de proposer autant de boissons que le nombre de logements dans lesquels sont stockées les capsules et autant de contenant possibles que le nombre de logements dans lesquels sont stockés les gobelets. En variante, le premier type de consommable correspond à des gobelets et le deuxième type de consommable correspond à des capsules.

Selon un mode de réalisation, le dispositif comporte un ensemble de séparateurs, chaque séparateur étant disposé sur la face inférieure du barillet au niveau d'une extrémité d'un logement du deuxième ensemble de logements, et un plateau mobile disposé sous le barillet, chaque séparateur étant apte à extraire un gobelet d'un logement du deuxième ensemble de logements pour le déposer sur le plateau. Ce mode de réalisation permet d'extraire du barillet le gobelet sélectionné et de le convoyer au moyen du plateau mobile.

Selon un mode de réalisation, chaque séparateur comporte plusieurs vis sans fin disposées dans l'axe du logement et au niveau des bords extérieurs du logement, les vis sans fin de chaque séparateur étant actionnées simultanément par un moyen d'entrainement pour extraire un gobelet du logement. Ce mode de réalisation permet d'extraire les gobelets empilés les uns dans les autres au sein du logement considéré.

Selon un mode de réalisation, le dispositif comporte en outre un bras de convoyage mobile en rotation, le bras de convoyage comportant une plaque supérieure et une plaque inférieure, les plaques étant mobiles l'une par rapport à l'autre pour prendre ou lâcher une collerette d'une capsule. Ce mode de réalisation permet d'extraire les capsules du barillet.

Selon un deuxième aspect, l'invention concerne un distributeur automatique de boissons comportant une machine d'extraction des substances d'une capsule et un dispositif de stockage et de distribution de consommables selon le premier aspect de l'invention, le dispositif étant apte à transmettre une capsule stockée dans le barillet à la machine, et le dispositif étant apte à positionner un gobelet stocké dans le barillet au niveau d'une sortie d'écoulement de la machine.

Selon un deuxième aspect, l'invention concerne un procédé de distribution automatique de boissons au moyen d'un distributeur automatique de boissons selon le deuxième aspect de l'invention, le procédé comportant les étapes suivantes :
- sélection d'une boisson parmi un choix de boissons,
- déplacement du barillet pour atteindre une capsule correspondante à la boisson sélectionnée,
- préhension de la capsule par un bras de convoyage,
- convoyage de la capsule jusqu'à la machine par rotation du bras de convoyage,
- libération de la capsule dans la machine,
- séparation d'un gobelet correspondant à la boisson sélectionnée au moyen d'un séparateur,
- convoyage du gobelet au niveau d'une sortie de la machine par rotation d'un plateau,
- extraction des substances de la capsule par la machine pour délivrer la boisson sélectionnée dans le gobelet.

### DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 4 représentent :
- Figure 1 : une représentation schématique de face et en perspective des éléments internes d'un distributeur automatique de boissons selon l'invention ;
- Figure 2 : un agrandissement de la partie inférieure de la figure 1 ;
- Figure 3 : une représentation schématique de dessous et en perspective des éléments de la figure 1 ; et
- Figure 4 : une représentation schématique de dessus des éléments de la figure 1.

### DESCRIPTION DETAILLEE DE L'INVENTION

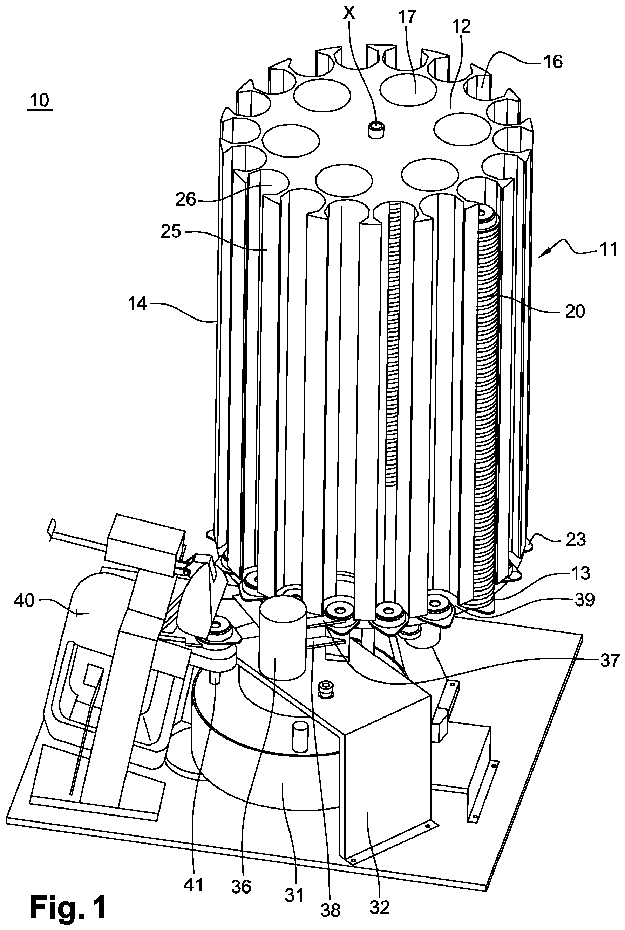

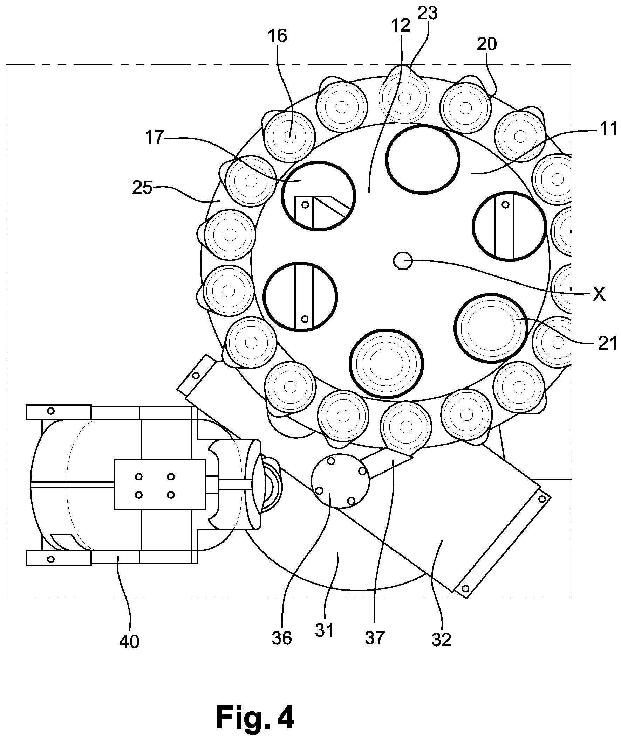

Les figures 1 à 4 illustrent les éléments internes d'un distributeur automatique de boissons selon différentes vues. Le distributeur automatique de boissons comporte un dispositif **10** de stockage et de distribution de consommables et une machine **40** d'extraction des substances d'une capsule **20** pour délivrer une boisson dans un gobelet **21** spécifique.

La machine **40** d'extraction des substances des capsules **20** est classique. Lorsqu'une capsule **20** est insérée dans la machine **40,** les substances de la capsule **20** sont extraites par le passage d'une eau chaude à l'intérieure de la capsule **20.** La boisson ainsi préparée est délivrée dans un gobelet **21** disposé sous une sortie d'écoulement **41.** Le fonctionnement de cette machine **40** nécessite donc deux types de consommables : des capsules **20** et des gobelets **21.**

Le dispositif **10** de stockage et de distribution de consommables comporte un barillet **11** mobile en rotation dans lequel les capsules **20** et les gobelets **21** sont stockés. Le dispositif **10** comporte également un bras de convoyage **36** apte à extraire les capsules **21** du barillet **11** pour les introduire dans la machine **40.** Les gobelets **21** sont extraits du barillet **11** par des séparateurs **30** associés à un plateau **31** mobile permettant de convoyer les gobelets **21** sous la sortie d'écoulement **41.** Pour ce faire, le plateau **31** peut être pourvu d'un logement de gobelets **21.**

Le barillet **11** présente une forme de révolution s'étendant en longueur autour d'un axe **X** qui est également l'axe de rotation du barillet **11.** Le barillet **11** présente une face supérieure **12** et une face inférieure **13** opposée à la face supérieure **12.** Les faces supérieure **12** et inférieure **13** sont sensiblement plane. Une face cylindrique **14** relie les faces supérieure **12** et inférieure **13.**

Dans la face cylindrique **14,** dix-huit rainures sont ménagées de sorte à créer un ensemble de logements **16** pour les capsules **20.** Les dix-huit rainures sont régulièrement espacées entre elles par rapport à l'axe **X** du barillet **11.** Chaque rainure s'étend longitudinalement entre les faces supérieure **12** et inférieure **13** du barillet **11.** La forme de toutes les rainures est identique, elle comporte une paroi circulaire **26** s'étendant radialement dans le barillet **11** et deux parois de retenue **25** disposées circonférentiellement depuis la face cylindrique **14** du barillet **11.** Les deux parois de retenue **25** permettent de maintenir les capsules **20** dans le logement **16** formé par la rainure. L'extrémité inférieure de chaque paroi de retenue 25 comporte un évidement 39 permettant d'extraire la capsule 20 de son logement 16.

Les capsules 20 peuvent ainsi être introduites par la face supérieure 12 du barillet 11 pour remplir le distributeur automatique de boissons. Le bras de convoyage 36 extrait une capsule 20 d'un logement 16 depuis la face inférieure 13 pour réaliser une boisson. Pour ce faire, le bras de convoyage 36 comporte une plaque supérieure 37 et une plaque inférieure 38 mobile en translation l'une par rapport à l'autre. La capsule 20 est maintenue dans le bras de convoyage **36** par resserrement des plaques supérieure **37** et inférieure **38** autour d'une collerette **23** de la capsule **20.** Le bras de convoyage **36** est alors déplacé en rotation de sorte à extraire la capsule **20** du logement **16** et de sorte à déplacer la capsule **20** jusqu'à une position dans laquelle la capsule **20** est insérée dans la machine **40.** Lorsque la capsule **20** est extraite du logement **16,** les autres capsules **20** disposées dans le logement **16** au-dessus de la capsule **20** extraite se déplacent en translation dans le logement **16** en direction de la face inférieure **13.** En variante, lorsque la capsule **20** n'est pas munie d'une collerette **23,** les plaques supérieure **37** et inférieure **38** peuvent saisir la capsule **20** par son diamètre extérieur ou tout autre partie de la capsule **20.**

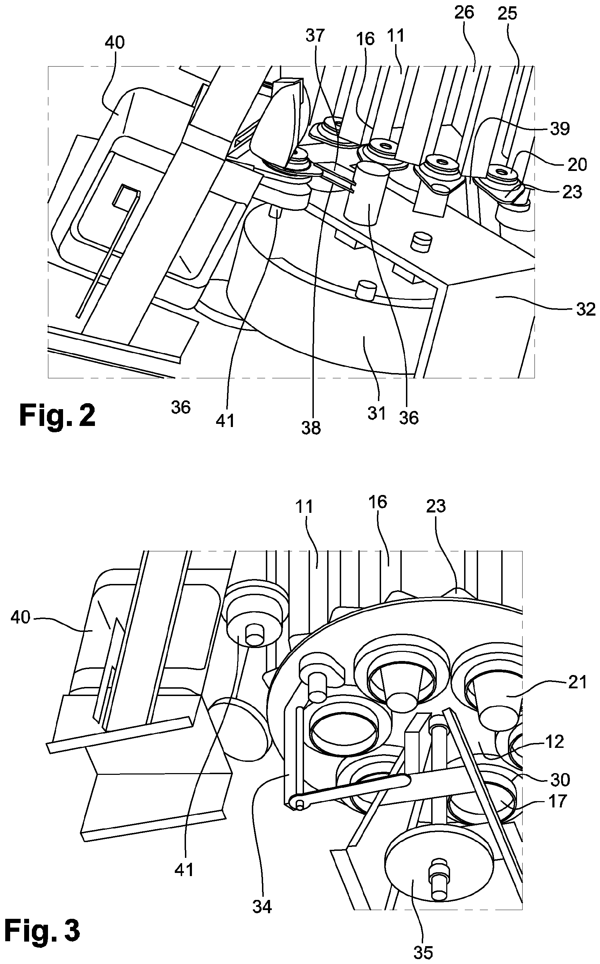

Dans le corps cylindrique du barillet **11,** six alésages traversant sont ménagés de sorte à créer un ensemble de logements **17** pour les gobelets **21** et permettre au distributeur automatique de boissons de sélectionner une taille de gobelet **21** associée à une boisson sélectionnée. Les six alésages sont régulièrement espacés entre eux par rapport à l'axe **X** du barillet **11** et chaque alésage présente une forme cylindrique. Chaque alésage s'étend longitudinalement entre les faces supérieure **12** et inférieure **13** du barillet **11.** L'extrémité inférieure de chaque alésage est pourvue d'un séparateur **30,** illustré sur la Figure 3. Les six séparateurs **30,** associés aux six logements **17,** sont disposés sur la face inférieure **13** du barillet **11.** Chaque séparateur **30** comporte un corps cylindrique à l'intérieur duquel est disposé plusieurs vis sans fin dont l'axe s'étant parallèlement à l'axe du logement **17.** Un moyen d'entrainement **34** permet d'entrainer simultanément toutes les vis sans fin d'un séparateur **30.**

Les gobelets **21** peuvent ainsi être introduits par la face supérieure **12** du barillet **11** pour remplir le distributeur automatique de boissons. Le séparateur **30** extrait un gobelet **21** d'un logement **17** depuis la face inférieure **13** pour réaliser une boisson. Pour ce faire, le barillet **21** est déplacé en regard d'un plateau **31** mobile disposé sous le barillet **21.** Lorsque le barillet **21** est correctement positionné pour extraire le gobelet **21** correspondant à la boisson recherchée, le moyen d'entrainement **34** est couplé avec un séparateur **30** et les vis sans fin du séparateur **30** sont mises en rotation. Le gobelet **21** se déplacement alors dans les rainures hélicoïdales des vis sans fin pour atterrir sur le plateau **31.** Le plateau **31** est déplacé en rotation de sorte que le gobelet **21** sélectionné soit positionné sous la sortie d'écoulement **41** de la machine **40.** Lorsque le gobelet **21** est extrait du logement **17,** les autres gobelets **21** disposés dans le logement **17** au-dessus du gobelet **21** extrait se déplacent en translation dans le logement **17** en direction de la face inférieure **13.**

Le couplage du moyen d'entrainement **34** et du séparateur **30** est effectué par une roue dentée motorisée coopérant avec une roue dentée du séparateur **30.** Le contact entre les deux roues dentées est guidé par une came reliée solidairement avec le plateau **31.** Lorsque le barillet **11** est en position pour l'extraction du gobelet **21,** le plateau **31** est déplacé en rotation pour atteindre une position de réception du gobelet **21.** Au cours de ce mouvement de rotation du plateau **31,** la came reliée au plateau **31** déplace le moyen d'entrainement **34** pour engrainer les deux roues dentées. Un moteur actionne alors le moyen d'entrainement **34** et un gobelet **21** est extrait du logement **17** pour atteindre le plateau **31.** Le plateau **31** est déplacé en rotation pour atteindre une position de remplissage du gobelet **21** ce qui déplace la came et désengage les deux roues dentées. En variante, le mouvement du moyen d'entrainement **34** est effectué par un actionneur indépendant du plateau **31.** En variante, la motorisation de chaque séparateur **30** est effectuée par un moteur dédié.

Dans le mode de réalisation, le positionnement du barillet **11** pour sélectionner la capsule **20** et le positionnement du barillet **11** pour sélectionner le gobelet **21** sont effectués par deux déplacements consécutifs. En variante, le positionnement du barillet **11** pour sélectionner la capsule **20** et le positionnement du barillet **11** pour sélectionner le gobelet **21** sont effectués en un seul mouvement du barillet **11.**

Un seul moteur peut être utilisé pour déplacer le barillet **11,** le plateau **31,** le moyen d'entrainement **34** du séparateur **30,** le bras de convoyage **36** et les plaques **37, 38** du bras de convoyage **36.** A cet effet, l'axe **X** du barillet **11** est relié à un moyen d'entrainement **35.** En variante, ces éléments sont entrainés par des moteurs distincts. De préférence, le bras de convoyage **36** est positionné sur un support **32** permettant de positionner le bras de convoyage **36** au-dessus du plateau **31.**

L'invention permet ainsi de proposer un grand nombre de boissons associées à un grand nombre de gobelets **21** de taille différentes en limitant l'encombrement du distributeur automatique de boissons.

## Revendications

1. Dispositif (10) de stockage et de distribution de consommables (20-21) pour un distributeur automatique de boissons, le dispositif (10) comportant :
- un barillet (11) comprenant une face supérieure (12), une face inférieure (13) et une face cylindrique (14) reliant les faces supérieure (12) et inférieure (13), et
- un premier ensemble de logements (16) formé par plusieurs rainures disposées sur la face cylindrique (14),
- le premier ensemble de logements (16) étant destiné à stocker un premier type de consommable (20),
**caractérisé en ce que** le dispositif comporte en outre :
- un deuxième ensemble de logements (17) formé par plusieurs alésages traversant le barillet (11) entre les faces supérieure (12) et inférieure (13),
- le deuxième ensemble de logements (17) étant destiné à stocker un deuxième type de consommable (21),
le barillet (11) intégrant à la fois des capsules et des gobelets de différentes tailles, le premier type de consommable (20) correspondant à des capsules et le deuxième type de consommable (21) correspondant à des gobelets,
- deux capsules de contenants distincts étant destinées à être positionnées dans deux logements (16) distincts du premier ensemble de logements (16), et
- deux gobelets de formes distinctes étant destinés à être positionnés dans deux logements (17) distincts du deuxième ensemble de logements (17).

2. Dispositif selon la revendication 1, **caractérisé en ce que** les logements (16-17) du premier ensemble de logements (16) et/ou du deuxième ensemble de logements (17) s'étendent longitudinalement entre les faces supérieure (12) et inférieure (13).

3. Dispositif selon la revendication 1 ou 2, **caractérisé en ce que** les logements (16, 17) du premier ensemble de logements (16) et/ou du deuxième ensemble de logements (17) sont régulièrement espacés par rapport au centre du barillet (11).

4. Dispositif selon l'une des revendications 1 à 3, **caractérisé en ce que** chaque logement (16) du premier ensemble de logements (16) comporte :
- une paroi circulaire (26) disposée dans le barillet (11) et
- une paroi de retenue (25) disposée circonférentiellement depuis la face cylindrique (14) du barillet (11),
- la paroi de retenue (25) comprenant un évidement (39) au niveau d'une extrémité de la face cylindrique (14) en regard de la face inférieure (13).

5. Dispositif selon l'une des revendications 1 à 4, **caractérisé en ce que** le dispositif (10) comporte en outre :
- un ensemble de séparateurs (30), chaque séparateur (30) étant disposé sur la face inférieure (13) du barillet (11) au niveau d'une extrémité d'un logement (17) du deuxième ensemble de logements (17), et
- un plateau (31) mobile disposé sous le barillet (11),
- chaque séparateur (30) étant apte à extraire un gobelet d'un logement (17) du deuxième ensemble de logements (17) pour le déposer sur le plateau (31).

6. Dispositif selon la revendication 5, **caractérisé en ce que** chaque séparateur (30) comporte plusieurs vis sans fin disposées dans l'axe du logement (17) et au niveau des bords extérieurs du logement (17), les vis sans fin de chaque séparateur (30) étant actionnées simultanément par un moyen d'entrainement (34) pour extraire un gobelet du logement (17).

7. Dispositif selon l'une des revendications 5 et 6, **caractérisé en ce que** le dispositif (10) comporte en outre :
- un bras de convoyage (36) mobile en rotation,
- le bras de convoyage (36) comportant une plaque supérieure (37) et une plaque inférieure (38),
- les plaques (37, 38) étant mobiles l'une par rapport à l'autre pour prendre ou lâcher une collerette (23) d'une capsule (20).

8. Distributeur automatique de boissons comportant :
- une machine (40) d'extraction des substances d'une capsule et
- un dispositif (10) de stockage et de distribution de consommables selon l'une des revendications 1 à 7,
- le dispositif (10) étant apte à transmettre une capsule stockée dans le barillet (11) à la machine (40), et
- le dispositif (10) étant apte à positionner un gobelet stocké dans le barillet (11) au niveau d'une sortie d'écoulement (41) de la machine (40).

9. Procédé de distribution automatique de boissons au moyen d'un distributeur automatique de boissons selon la revendication 8, le procédé comportant les étapes suivantes :
- sélection d'une boisson parmi un choix de boissons,
- déplacement du barillet (11) pour atteindre une capsule correspondante à la boisson sélectionnée,
- préhension de la capsule par un bras de convoyage (36),
- convoyage de la capsule jusqu'à la machine (40) par rotation du bras de convoyage (36),
- libération de la capsule dans la machine (40),
- séparation d'un gobelet correspondant à la boisson sélectionnée au moyen d'un séparateur (30),
- convoyage du gobelet au niveau d'une sortie de la machine (40) par rotation d'un plateau (31),
- extraction des substances de la capsule par la machine (40) pour délivrer la boisson sélectionnée dans le gobelet.

## Patentansprüche

1. Lager- und Verteilungsvorrichtung (10) für Verbrauchsgüter (20-21) für einen Getränkeautomaten, wobei die Vorrichtung (10) aufweist:
- ein Fass (11) mit einer oberen Fläche (12), einer unteren Fläche (13) und einer zylindrischen Fläche (14), die die obere (12) und untere (13) Fläche verbindet, und
- eine erste Gehäusebaugruppe (16), die durch eine Vielzahl von auf der zylindrischen Fläche (14) angeordneten Nuten gebildet wird;
- diese erste Gehäusebaugruppe (16), die zur Lagerung einer ersten Art von Verbrauchsgüter (20) bestimmt ist,
**dadurch gekennzeichnet, dass** die Vorrichtung außerdem umfasst:
- eine zweite Gehäusebaugruppe (17), die durch eine Vielzahl von Bohrungen gebildet wird, die zwischen der oberen (12) und der unteren (13) Fläche durch das Fass (11) durchführen;
- die zweite Gehäusebaugruppe (17). die zur Lagerung einer zweiten Art von Verbrauchsgütern (21) bestimmt ist,
wobei das Fass (11) gleichzeitig Kapseln und Becher verschiedener Größe enthält, wobei die erste Art Verbrauchsgüter (20) Kapseln entspricht und die zweite Art Verbrauchsgüter (21) Bechern entspricht,
- wobei zwei Kapseln unterschiedlicher Behälter in zwei unterschiedlichen Gehäusen (16) der ersten Gehäusebaugruppe (16) untergebracht werden sollen und
- wobei zwei Becher unterschiedlicher Form in zwei unterschiedlichen Gehäusen (17) der zweiten Gehäusebaugruppe (17) untergebracht werden sollen.

2. Vorrichtung gemäß Anspruch 1, **dadurch gekennzeichnet, dass** die Gehäuse (16-17) der ersten Gehäusebaugruppe (16) und/ oder der zweiten Gehäusebaugruppe (17) in Längsrichtung zwischen der oberen (12) und der unteren (13) Fläche angeordnet sind.

3. Vorrichtung gemäß Anspruch 1 oder 2, **dadurch gekennzeichnet, dass** die Gehäuse (16-17) der ersten Gehäusebaugruppe (16) und/ oder der zweiten Gehäusebaugruppe (17) einen, bezogen auf das Fasszentrum (11) regelmäßigen Abstand haben.

4. Vorrichtung gemäß einem der Ansprüche 1 bis 3, **dadurch gekennzeichnet, dass** jedes Gehäuse (16) der ersten Gehäusebaugruppe (16) umfasst:
- eine im Fass (11) vorgesehene umlaufende Wand (26) und
- eine Rückhaltewand (25), die auf dem Umfang angeordnet ist, von der zylindrischen Fläche (14) des Fasses (11) aus,
- die Rückhaltewand (25), die eine Aussparung (39) in Höhe eines Endes der zylindrischen Fläche (14) gegenüber der unteren Seite (13) umfasst.

5. Vorrichtung gemäß einem der Ansprüche 1 bis 4 , **dadurch gekennzeichnet, dass** die Vorrichtung (10) außerdem umfasst:
- eine Baugruppe mit Trennvorrichtungen (30), wobei jede Trennvorrichtung (30) auf der Innenseite (13) des Fasses (11) in Höhe eines Endstücks eines Gehäuses (17) der zweiten Gehäusebaugruppe (17) angeordnet ist und
- eine unter dem Fass (11) angeordnete bewegliche Platte (31),
- jede Trennvorrichtung (30), die in der Lage ist, einen Becher aus einem Gehäuse (17) der zweiten Gehäusebaugruppe (17) zu entnehmen und auf der Platte (31) abzustellen.

6. Vorrichtung gemäß Anspruch 5, **dadurch gekennzeichnet, dass**: jede Trennvorrichtung (30) mehrere Endlosschnecken enthält, die in der Achse des Gehäuses (17) und in Höhe der Außenränder des Gehäuses (17) angeordnet sind, wobei die Endlosschnecken jeder Trennvorrichtung (30) gleichzeitig durch eine Antriebsvorrichtung (34) betätigt werden, um einen Becher aus dem Gehäuse (17) zu entnehmen.

7. Vorrichtung gemäß einem der Ansprüche 5 und 6 , **dadurch gekennzeichnet, dass** die Vorrichtung (10) außerdem umfasst:
- einen drehbar beweglichen Förderarm (36),
- wobei der Förderarm (36) eine obere Platte (37) und eine untere Platte (38) umfasst,
- wobei diese Platten (37, 38) gegeneinander beweglich sind, um den Kragen (23) einer Kapsel (20) zu ergreifen oder loszulassen.

8. Getränkeautomat, umfassend:
- eine Maschine (40) zur Extraktion der Substanzen einer Kapsel und
- eine Vorrichtung (10) zur Aufbewahrung und Ausgabe von Verbrauchsgütern nach einem der Ansprüche 1 bis 7,
- wobei die Vorrichtung (10) in der Lage ist, eine im Fass (11) aufbewahrte Kapsel an die Maschine (40) weiterzugeben, und
- wobei die Vorrichtung (10) in der Lage ist, einen im Fass (11) aufbewahrten Becher in Höhe der Auslassöffnung (41) der Maschine (40) zu positionieren.

9. Verfahren zur automatischen Getränkeausgabe mittels eines Getränkeautomaten gemäß Anspruch 8, wobei das Verfahren die folgenden Schritte umfasst:
- Auswahl eines Getränks aus einer Getränkeauswahl,
- Verschieben des Fasses (11), um eine Kapsel zu erreichen, die dem gewählten Getränk entspricht,
- Ergreifen der Kapsel mittels eines Förderarms (36),
- Transport der Kapsel bis zur Maschine (40) durch Drehen des Förderarms (36),
- Freigabe der Kapsel in der Maschine (40),
- Abnahme eines Bechers, der dem gewählten Getränk entspricht, mittels der Trennvorrichtung (30),
- Transport des Bechers zum Auslass der Maschine (40) durch Drehen einer Platte (31),
- Extraktion der Substanzen der Kapsel durch die Maschine (40) zur Ausgabe des gewählten Getränks in den Becher.

## Claims

1. Device (10) for storing and dispensing consumables (20-21) for an automatic drink dispenser, the which device (10) incorporates:
- a turret (11) incorporating an upper face (12), a lower face (13) and a cylindrical face (14) joining the upper (12) and lower (13) faces,
and
- a first set of housings (16) constituted by multiple grooves positioned on the cylindrical face (14),
- with the first set of housings (16) being intended to store a first type of consumable (20),
**characterized in that** the device also incorporates:
- a second set of housings (17) constituted by multiple borings traversing the turret (11) between the upper (12) and lower (13) faces,
- with the second set of housings (17) being intended to store a second type of consumable (21),
with the turret (11) incorporating both capsules and cups of different sizes, with the first type of consumable (20) being capsules and the second type of consumable (21) being cups;
- with two capsules of separate containers being intended to be positioned in two housings (16) separate from the first set of housings (16), and
- two cups of different shapes being intended to be positioned in two housings (17) separate from the second set of housings (17).

2. Device in accordance with claim 1, **characterized in that** the housings (16-17) of the first set of housings (16) and/or the second set of housings (17) extend longitudinally between the upper (12) and lower (13) faces.

3. Device in accordance with claim 1 or 2, **characterized in that** the housings (16, 17) of the first set of housings (16) and/or the second set of housings (17) are regularly spaced in relation to the center of the turret (11).

4. Device in accordance with one of claims 1 to 3, **characterized in that** each housing (16) of the first set of housings (16) incorporates:
- a circular wall (26) positioned in the turret (11) and
- a retaining wall (25) positioned circumferentially in relation to the cylindrical face (14) of the turret (11),
- with the retaining wall (25) incorporating a void (39) at one extremity of the cylindrical face (14), opposite the lower face (13).

5. Device in accordance with one of claims 1 to 4, **characterized in that** the device (10) also incorporates:
- a set of separators (30), with each separator (30) being positioned on the lower face (13) of the turret (11), at one extremity of a housing (17) of the second set of housings (17), and
- a moving plate (31) positioned under the turret (11),
- with each separator (30) being able to extract a cup from a housing (17) of the second set of housings (17) in order to deposit it on the plate (31).

6. Device in accordance with claim 5, **characterized in that** each separator (30) incorporates multiple worm screws positioned within the center line of the housing (17) and at the exterior edges of the housing (17), with the worm screws of each separator (30) being actuated simultaneously by a drive system (34) in order to extract a cup from the housing (17).

7. Device in accordance with one of claims 5 and 6, **characterized in that** the device (10) also incorporates:
- a rotatable conveyor arm (36),
- with the conveyor arm (36) incorporating an upper plate (37) and a lower plate (38),
- with the plates (37, 38) being mobile in relation to each other, in order to seize or release a collar (23) of a capsule (20).

8. Automatic drink dispenser incorporating:
- a machine (40) for extracting substances from a capsule, and
- a device (10) for storage and distribution of consumables in accordance with one of claims 1 to 7,
- with the device (10) being able to transfer a capsule stored in the turret (11) to the machine (40), and
- with the device (10) being able to position a cup stored in the turret (11) to the machine (40), and
- with the device (10) being able to position a cup stored in the turret (11) at one pouring outlet (41) on the machine (40).

9. Process for automatic dispensing of beverages by means of an automatic drink dispenser in accordance with claim 8, with the process including the following steps:
- selection of a beverage from a selection of beverages;
- movement of the turret (11) to reach a capsule corresponding to the beverage selected;
- gripping of the capsule by a conveyor arm (36);
- conveyance of the capsule to the machine (40) by rotation of the conveyor arm (36);
- releasing of the capsule in the machine (40);
- separation of a cup corresponding to the selected beverage, by means of a separator (30);
- conveyance of the cup to an outlet in the machine (40), by rotation of a plate (31);
- extraction of the substances from the capsule by the machine (40), in order to deliver the selected beverage in the cup.
